(19) Europäisches Patentamt
European Patent Office
Office européen des brevets

(11) **EP 1 879 247 B1**

(12) **EUROPEAN PATENT SPECIFICATION**

(45) Date of publication and mention
of the grant of the patent:
**21.09.2011 Bulletin 2011/38**

(51) Int Cl.:
*H01M 4/36* (2006.01)   *H01M 4/38* (2006.01)
*H01M 4/58* (2010.01)

(21) Application number: **07252760.9**

(22) Date of filing: **10.07.2007**

(54) **Anode active material for lithium secondary battery hybridized with carbon nano fibres**

Anodenaktives Material für eine Lithium-Sekundärbatterie hybridisiert mit Kohlenstoffnanofasern

Matériau actif d'anode pour batterie secondaire au lithium hybridisé par des nano fibres de carbone

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **14.07.2006 KR 20060066215
20.06.2007 KR 20070060218**

(43) Date of publication of application:
**16.01.2008 Bulletin 2008/03**

(73) Proprietor: **Korea Kumho Petrochemical Co. Ltd.
Jongro-gu,
Seoul (KR)**

(72) Inventors:
• **Kim, Dong Hwan,**
**c/o 101-507 Daelim Dure Apt.**
**Daejeon 305-720 (KR)**
• **Choi, Im Goo,**
**c/o 106-1301 Hanbit Apt.**
**Daejeon 305-755 (KR)**
• **Jang, Seung Yeon,**
**c/o 202 Woojoo Villa**
**Daejeon 305-345 (KR)**
• **Choi, Namsum,**
**c/o 110-307 Daelim Dure Apt**
**Daejeon 305-720 (KR)**
• **Ryu, Sang-Hyo**
**Daejeon 305-345 (KR)**
• **Jang, Youngchan,**
**c/o 105-906 Chonggu Narae Apt.**
**Daejeon 305-729 (KR)**
• **Lee, Kwangyoung,**
**c/o 505-1601 Yeolmae Maeul Apt**
**Daejeon 305-330 (KR)**

(74) Representative: **Harding, Charles Thomas
D Young & Co LLP
120 Holborn
London
EC1N 2DY (GB)**

(56) References cited:
**US-A1- 2003 116 503     US-B1- 6 440 610
US-B1- 6 537 515**

Description

## BACKGROUND OF THE INVENTION

### Field of the Invention

The present invention relates to an anode active material hybridizing carbon nano fibers for lithium secondary battery and a manufacturing method for preparing an anode for lithium secondary battery. More particularly, this invention relates to anode active material selected from amorphous silicon or a complex of graphite and amorphous silicon on which carbon nano fibers are grown and hybridized, and a preparation method thereof, wherein carbon nano fibers are grown on the surface of anode active material.

### Description of Prior Art

In 21 st century, the new paradigm of information technology capable of multi-media interactive communication has been introduced, according to the development of semiconductor which affords the small size of portable telecommunication devices, such as notebook computer, mobile and DMB phone. In accordance with the needs of multifunctional electronic devices, high capacity and high voltage secondary battery has been studied and developed with respect to electrode material. Energy density and capacity of secondary battery has been rapidly increased, since SONY developed and marketed its first graphite based lithium ion secondary battery in early 90's. However, the development of secondary battery, which contains higher capacity, higher charge/discharge capacity and higher cyclic stability than what it does, has been still required. Because the capacity of battery depends on the charge/discharge properties of anode material, the improvement of anode active material has been a main issue in the development of secondary battery.

The various kinds of surface reforming researches of anode active material, such as inorganic coating, crystalline carbon coating, pyrocarbon coating, carbon nano fiber dispersion or carbon nano tube dispersion, have been carried out in order to improve the electrochemical properties of carbon graphite anode material in secondary battery. Such methods prevent the destruction of crystalline structure in anode material in the course of inserting/emitting the lithium ions in lithium secondary battery. On the other hand, natural graphite anode material coated with crystalline carbon has been developed in order to improve the charge and discharge properties of lithium secondary battery.

Many technologies have been disclosed to improve charging/discharging capacities of anode material using graphite in lithium secondary battery.

Iresha R.M Kottegoda et al disclosed a natural graphite anode material surface reformed by zirconia (Electrochem. Solid-state lett. Vol. 5, Issue 12 pp A273-A278 (2002)). Tasutomu Takamura also disclosed graphite carbon fiber anode active material coated with conductive carbon in order to enhance the electro-chemical properties, such as high cyclic stability and high efficiency of charging/discharging properties (Journal of Power Source 90 pp45-51 (2000)). Further, Korean Patent No. 529, 069 'Anode active material for lithium secondary battery and its preparation method' disclosed crystalline anode active material coated with an amorphous carbon layer. Further, Korean Patent No. 477, 970 'Anode active material for lithium secondary battery and its preparation method' disclosed a method for preparing an anode active material complex, wherein the surface of crystalline graphite particles is coated with fine particles, followed by heat treatment of the obtained particles. On the other hand, in Korean Patent Early publication No. 2005-99697, 'Anode active material for lithium secondary battery and lithium secondary battery containing said anode' and Korean Patent Early publication No. 2005-100505, 'Anode active material for lithium secondary battery and lithium secondary battery', it has been disclosed, respectively, that grinded plate graphite powder and amorphous carbon particles are subsequently assembled to prepare the anode active material. However, the anode active material prepared by amorphous carbon coating to plate type or fiber type of active material cannot be commercially marketed, because non-reversible capacity of battery increases accordingly with the increase of reversible capacity and surface area.

On the other hand, metals have been used as material for reforming the carbon anode material. Tasutomu Takamura et al disclosed that charging/discharging properties have been enhanced by metal lamination coating to the graphite anode material surface using Ag, Au, Bi, I or Zn according to the metal heating deposition method (Journal of Power Source 81-82 pp368-372 (1999)). U.S.Pat.No.6,797,434 disclosed that anode active material includes a mixture of carbonaceous material and an amorphous metal compound, such as tin oxide. Further, in Korean Patent Early publication No. 2004-100058, 'Anode active material for lithium secondary battery and its preparation method', it has been disclosed that anode active material is prepared by a carbon/metal complex using carbon material and a metal precursor. Further, Korean Patent No. 536,247 'Anode active material for lithium secondary battery and lithium secondary battery containing said anode' disclosed that anode active material is prepared by forming the inorganic oxide or hydroxide layer, such as Al, Ag, B, Zn, or Zr to the surface of graphite carbon material according to the heat treatment process.

However, in order to reform the carbon anode surface using metals according to the above mentioned methods, the surface coating material shall be uniformly dispersed before coating. Further, to obtain a uniformed metal oxide layer, a large amount of metal precursors shall be required. On the other hand, a plate type of graphite which is not a spherical particle is hard to be uniformly dispersed, which requires additional heat treatment to prepare the layer having uniformed thickness.

Regarding high capacity anode active material, metal silicon anode material has been known that it shows more than 10 times high energy density compared to that of graphite anode material. However, in the course of charging and discharging, the volume expansion caused by alloy of lithium and silicon, such as $Li_{1.71~4.4}Si$, is induced, which is 4 times larger than that of silicon itself. Therefore, this expansion causes the decomposition of silicon electrode structure, which results in the rapid decline of discharging capacity even less than 20% of the initial discharging capacity. Eventually, the silicon material shall lose the function of anode active material. To overcome the above mentioned handicaps, many researches have been carried out to enhance the stability of silicon electrode structure. Some representative examples include the uses of nano size particle of silicon and the uses of alloy with transition metal, such as nickel or copper, carbon/silicon complex, changing the oxygen contents of silicon and/or development of electrode binder. However, the decline of capacity by repeating the charging and discharging cycles as well as the maintenance of more than 1000mAh/g of high capacity of silicon anode material has not been solved yet.

Carbon nano material, such as vapor-grow carbon fibers (VGCF), carbon nano tubes, carbon nano fibers or fullerene, has been developed as carbon electrode material. Further, PCT Patent pamphlet WO 03/67699 A2 disclosed that anode active material for lithium battery is prepared by mixed materials of spherical graphite of meso-phase carbon micro-balls; carbon nano-fibers (VGCF) of 200nm diameter and 65 ~ 70nm inner core diameter; and an ion conducting polymeric binder. Further, Japanese Patent Early publication No. 2004-186067 disclosed that anode active material for lithium battery is prepared by a mixture of carbon nano fibers having 10~500nm of average diameter and carbon agglutinated particles. Further, Japanese Patent Early publication No. 2004-227988 disclosed that graphite carbon nano fibers are added to graphite anode active material as a conductive agent, which shows excellent charging/discharging capacity compared to that of a conventional conductive agent. Further, Japanese Patent Early publication No. 2004-303613 disclosed that the carbon nano tube or the carbon nano fiber is used as anode active material of lithium secondary battery, which suppresses the decomposition of PC electrolyte.

Since carbon nano material, such as the carbon nano tube or the carbon nano fiber has large surface area, such material has a handicap due to the high ratio of volume to weight in the electrode. Therefore, according to the increase of amount of carbon nano material, the processibility of electrode has to be declined due to the difficulty of binding the nano material with current collector in the electrode. Further, the high cost of carbon nano material compared to graphite is another handicap for commercializing.

To overcome the problems for using the carbon nano tube or the carbon nano fiber as anode active material, Korean Patent No. 566,028 'Carbon nano material for anode active material of lithium secondary battery and its preparation method' disclosed the carbon nano fiber complex with metal particles, such as Ag, Sn, Mg, Pd, or Zn as anode active material. However, the simple complex of carbon nano material with anode material causes another handicap, because the growth of carbon nano fibers has been made in an irregular direction as well as in a large volume density of carbon nano fibers in the electrode. In this case, carbon nano fibers have a main role of anode active material, which results in low cyclic property of the carbon nano fiber itself. To overcome low cyclic property of carbon nano fibers, anode active material shall be prepared by introducing heat treatment process at more than 2000 °C. Even though the electro-conductivity between anode active materials can be enhanced by adding a conductive agent, the decomposition of structure caused by fundamental volume expansion cannot be avoided in the course of charging and discharging cycles.

U.S.Pat. No. 6,440,610 B1 'Anode active material for lithium secondary battery and its preparation method' disclosed a method for growing the vapor deposition carbon nano fiber or nano tube at the surface of anode active material. It has been disclosed that the vapor grown carbon fiber is prepared by the steps comprising i) adsorbing metal nitrate particle to the anode material by spray drying method after mixing and dissolving metal salt in an aqueous solution, ii) heating the obtained material in a high temperature for oxidation and reduction process, and iii) growing the carbon nano fiber by a vapor deposition method. However, this preparation method has following drawbacks of i) inducing the aggregation of metal nitrate particles having strong hydrophilic property in the course of preparing a catalyst, ii) irregularly growing the carbon nano fiber due to said aggregation, iii) sintering the metal catalyst particles during the continuous carbonation, oxidation and reduction in high temperature, and iv) inducing the thermal change of graphite particles.

On the other hand, if carbon nano material is grown in a vertical direction or a slope direction from the surface of carbon anode active material, the grown carbon nano fibers or carbon nano tubes shall be entangled, which results in the increase of volume density. Therefore, the density of active anode material as to total volume of electrode becomes decreased. Further, the growth of carbon nano material in the graphite particles also induces the aggregation of graphite particles, which results in the difficulties in optimal particle control of anode active material at the time of preparing an electrode.

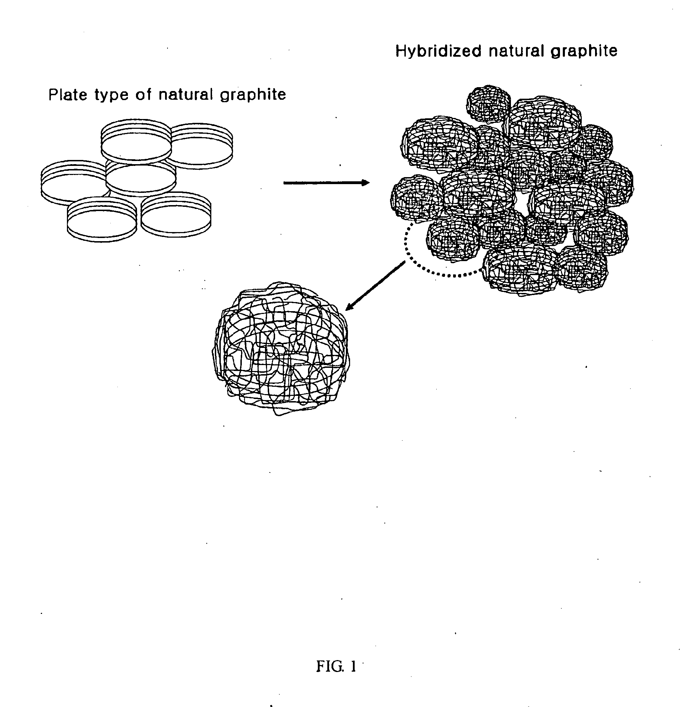

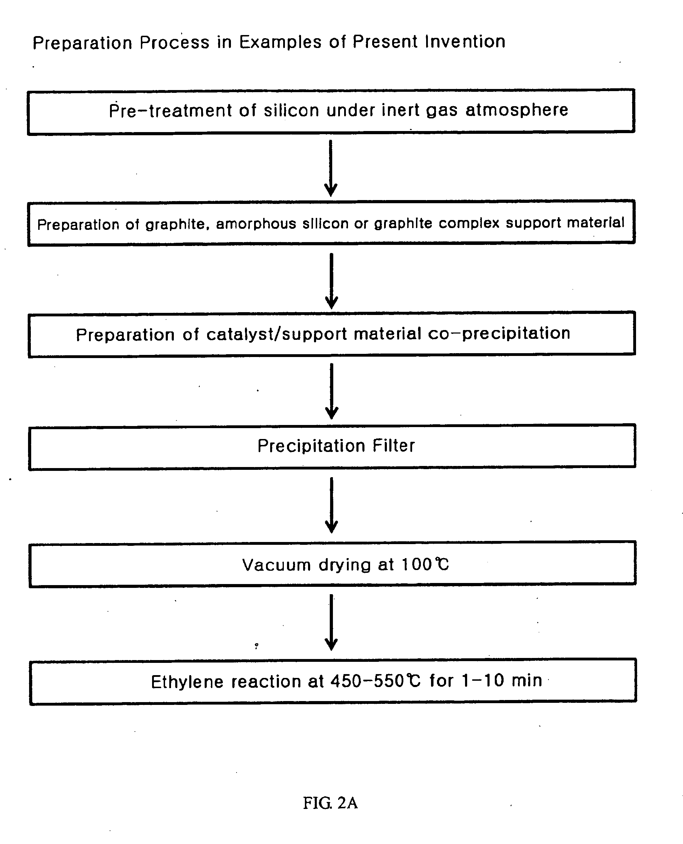

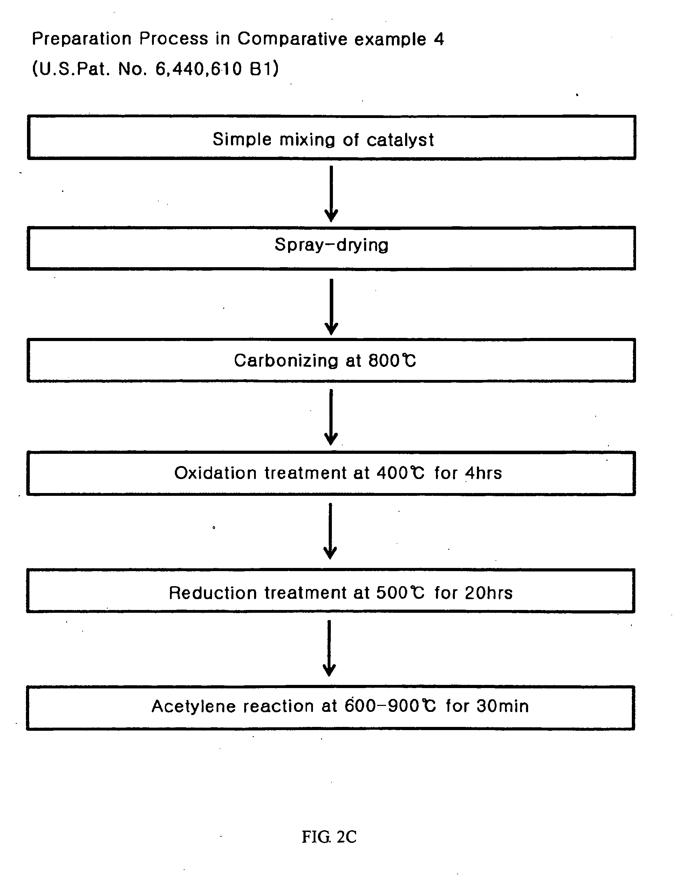

FIG. 1 illustrates the structure of graphite hybridized with carbon nano fibers according to the present invention. Carbon nano fibers are hybridized with stacked natural graphite to be used as anode active material of lithium secondary battery. As shown in FIG. 1, carbon nano fibers of the present invention surround the stacked natural graphite in a vine form. Therefore, the surface of natural graphite is hybridized with carbon nano fibers in which natural graphite particles function as support material for carbon nano fibers. The disclosure of present invention is different from that of U.S. Pat. No. 6,440,610 B1 'Negative active material for lithium secondary battery and manufacturing method of same', in which carbon nano material is grown in a vertical direction or a slope direction from the surface of graphite anode active material. Further, it is clearly distinguished from the fact that the process diagram for preparing carbon nano fibers of the present invention shown in FIG. 2(A) is different from the process disclosed in U.S. Pat. No. 6,440,610 B1 as shown in FIG. 2(C).

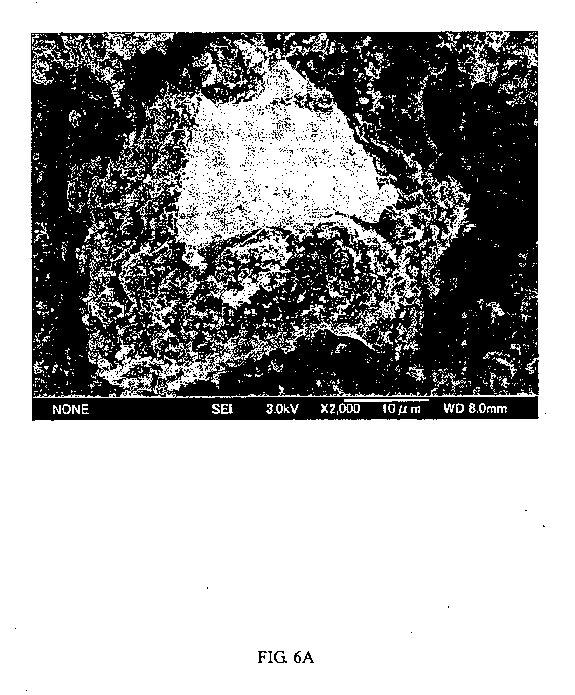

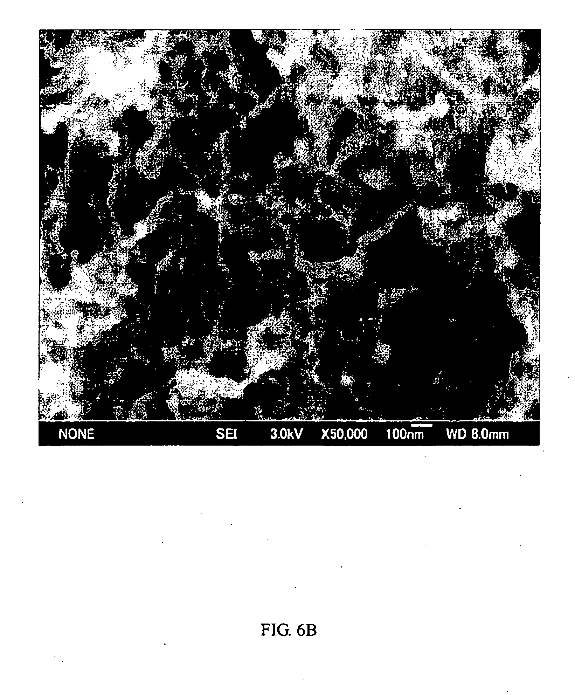

On the other hand, the carbon nano fiber grown on the surface of crystalline silicon particles may be easily detached at the time of compressing the particles, because the binding force between the crystalline silicon particle and the carbon nano fiber becomes low. As shown in FIG. 6, the carbon nano fiber inclines to be easily detached from the surface of crystalline silicon when the outside force is influenced. Therefore, the carbon nano fiber cannot surround the surface of crystalline silicon effectively, which cannot prevent the volume expansion of silicon in the course of repeating the charging/discharging cycles. Further, the alloy of silicon with other rare metals has been attempted in order to enhance the charging/discharging property of silicon. However, the silicon alloy having high charging/discharging properties has not been developed yet.

It has been known that the structural stability of metal active material can be maintained during the volume expansion according to the insertion/emission of lithium ion, when the crystalline structure of metal active material changes into the amorphous form. Recently, the melt spinning method comprising the steps of melting the crystalline metal at high temperature and cooling the crystalline metal rapidly in a short time has been reported as a useful method to transform the crystalline silicon into the amorphous. However, the industrial application of this method has some limitations.

On the other hand, anode active material composed by graphite or metal in the lithium secondary battery inclines to be expanded or contracted during the insertion/emission of lithium ion, which results in the decomposition of crystalline structure. Eventually, this anode material can not be used any longer due to the decline of cyclic capacity.

The inventors recently found a new method making amorphous silicone by adding shear stress to the crystalline silicon in an inert atmosphere, which results in the decomposition of crystalline structure of silicon. Further, the high degree of amorphous silicon can be obtained if the shear stress is added by mixing graphite particles with the silicon. Using the high degree of amorphous silicon, the growth of carbon nano fibers can be made in a hybridized form on the silicon anode active material. Eventually, the adjustment of crystalline portion and amorphous portion in the silicon structure enables to control the hybridization of carbon nano fibers with the silicon anode active material.

In the present invention, a uniformed growth of carbon nano fibers on the anode active material in a hybridized form has been accomplished using a growth control technology, without using the bulk phase of carbon nano material. Therefore, the present invention can be completed by developing hybridized material between the carbon nano fiber and the anode active material which maintains the high capacity charging/discharging properties and the cyclic properties of graphite and/or silicon material.

## SUMMARY OF THE INVENTION

The object of the present invention is to provide anode active material hybridized with carbon nano fibers for lithium secondary battery prepared by following steps comprising, i) dispersing the nano size metal catalyst to the surface of anode material selected from amorphous silicon or a complex of graphite and amorphous silicon; and ii) growing the carbon nano fiber by a chemical vapor deposition method, wherein carbon nano fibers are grown on the surface of the anode active material; wherein said amorphous silicon is prepared by pre-treatment using mechanical friction energy under an inert atmosphere. Also, the complex of graphite and amorphous silicon is prepared by the weight ratio of 1 ~ 50 wt% of graphite and 50 ~ 99 wt% of amorphous silicon.

Further, the structure of the carbon nano fiber is platelet or herringbone structure hybridized with anode active material.

On the other hand, the grown amount of carbon nano fibers is 1 ~ 200 wt part as to 100 wt part of anode active material, the diameter of carbon nano fibers is 5 ~ 300 nm, the aspect ratio is 10 ~ 10000, the thickness of carbon nano fibers on the active anode material is 5 ~ 1000 nm. The preferred grown amount of carbon nano fibers is 5 ~ 100 wt part as to 100 wt part of anode active material, the preferred diameter of carbon nano fibers is 5 ~ 100 nm, the preferred aspect ratio is 10 ~ 1000, the preferred thickness of carbon nano fibers on the active anode material is 10 ~ 500 nm. The further preferred grown amount of carbon nano fibers is 10 ~ 80 wt part as to 100 wt part of anode active material, the further preferred diameter of carbon nano fibers is 5 ~ 50 nm, the further preferred aspect ratio is 10 ~ 100, the further preferred thickness of carbon nano fibers on the active anode material is 15 ~ 200 nm.

On the other hand, said carbon nano fiber is prepared by a chemical vapor deposition method using a carbon source selected from carbon monoxide, methane, acetylene or ethylene in the presence of metal catalyst. Further, said metal catalyst comprised at least one selected from the group consisting of Fe, Co, Ni, Cu, Mg, Mn, Ti, Sn, Si, Zr, Zn, Ge, Pb and In, which is in the form of alkoxide, oxide, chloride, nitrate or carbonate, and this catalyst can be prepared in the form of a supported catalyst using a sol-gel method, a precipitation method, a hydrothermal reaction method, a spray heating method, a spray drying method or a ball-mill method.

More specifically, said carbon nano fiber is prepared by following steps comprising i) heating the anode active material particles selected from amorphous silicon or a complex of graphite and amorphous silicon using mixed gas of helium and hydrogen (3~5 L/min: 1 L/min) at 300 ~ 650°C; ii) growing the carbon nano fiber by vapor deposition using a carbon source selected from carbon monoxide, methane, acetylene or ethylene in the presence of catalyst composition made by nickel nitrate and ammonium bicarbonate in mixed gas of helium and hydrogen at 400 ~ 800 °C.

The other object of the present invention is to provide lithium secondary battery prepared by anode active material of the present invention.

## BRIEF DESCRIPTION OF THE DRAWINGS

FIG. 1 shows the change of structure of anode active material while carbon nano fibers are grown and hybridized with a graphite active plate.

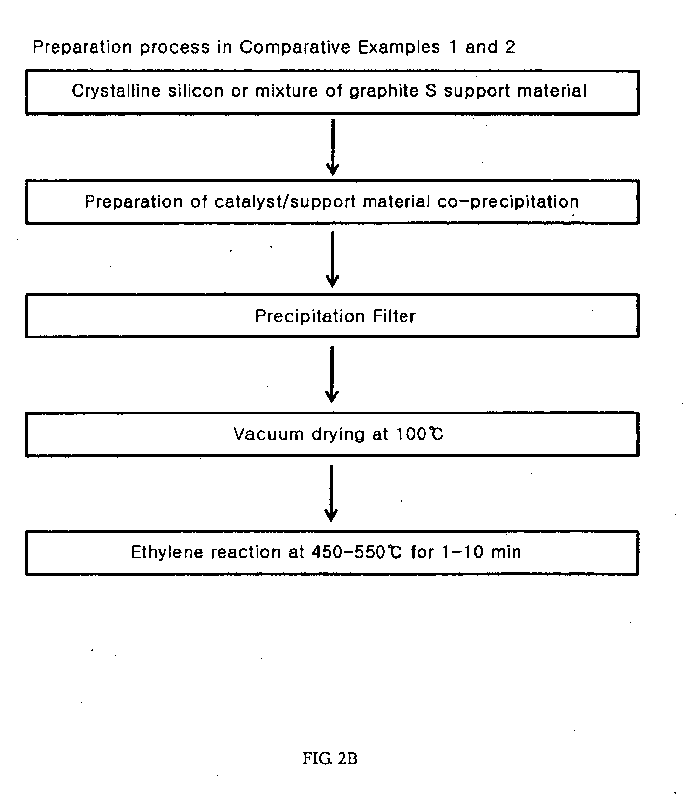

FIG. 2A shows a process flow for preparing the carbon nano fiber on the anode active material in Examples of the present invention. FIG. 2B shows a process for preparing the carbon nano fiber on the anode active material in Comparative Examples 1 and 2 of the present invention. FIG. 2C shows a process for preparing the carbon nano fiber on the anode active material in Comparative Example 4 (U.S.Pat. No. 6,440,610 B1).

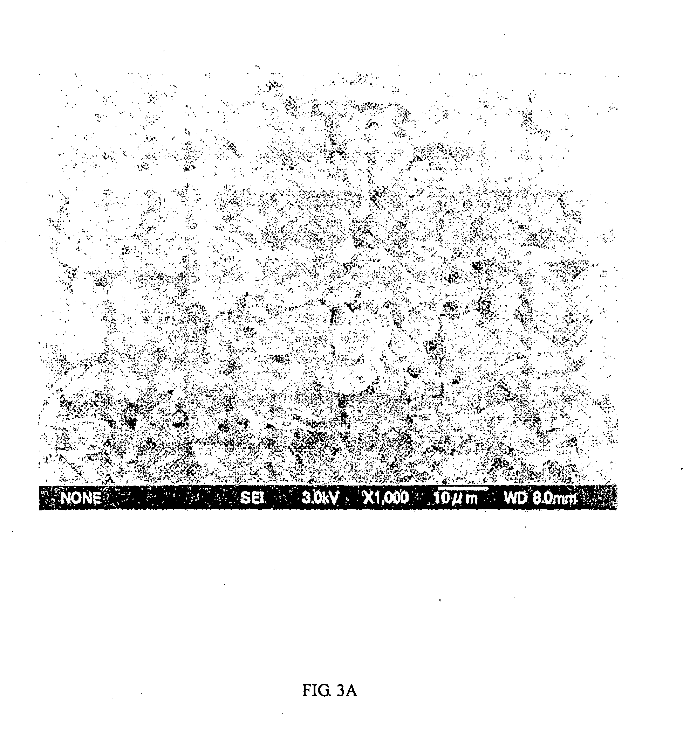

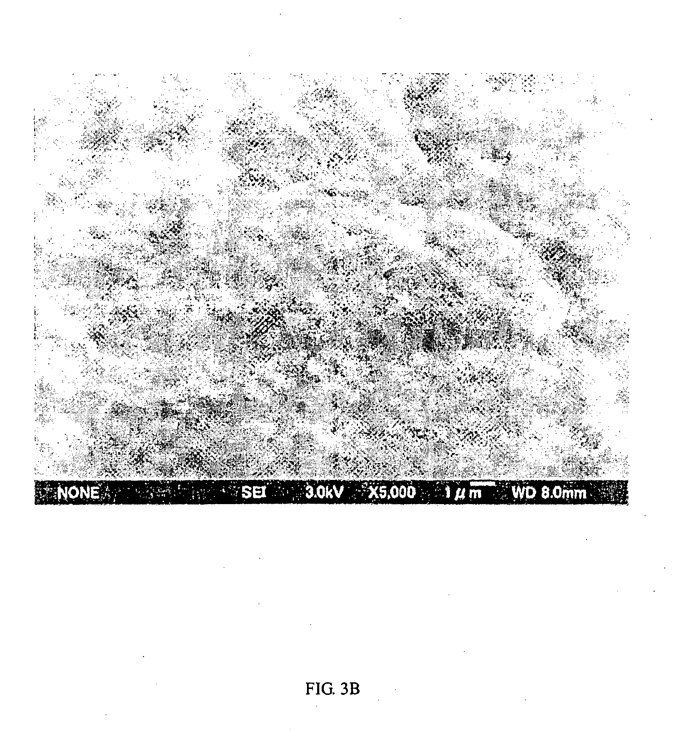

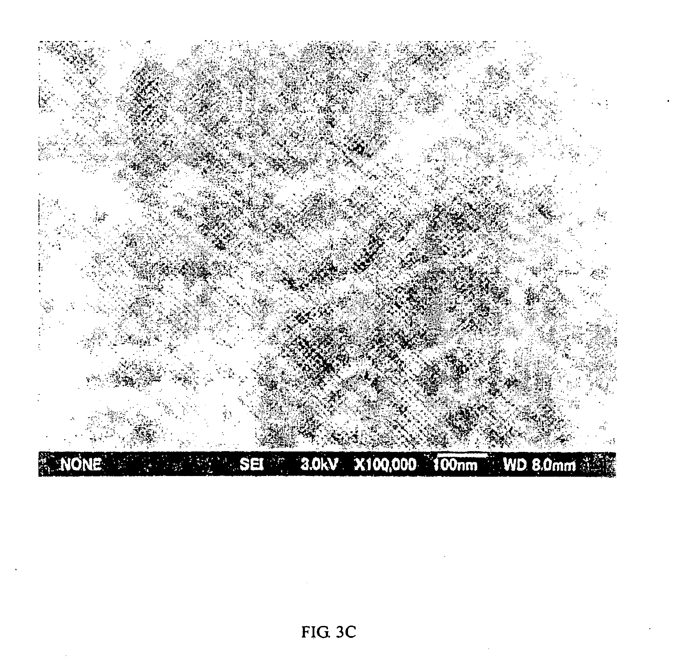

FIG. 3 is a Field Emission Scanning Electron Microscope (FE-SEM) photography of the surface of graphite in Preparation Example 1, where the carbon nano fiber is hybridized. FIG. 3A is a photography (magnitude x1000), FIG. 3B is a photography (magnitude x5000) and FIG. 3C is a photography (magnitude x100000).

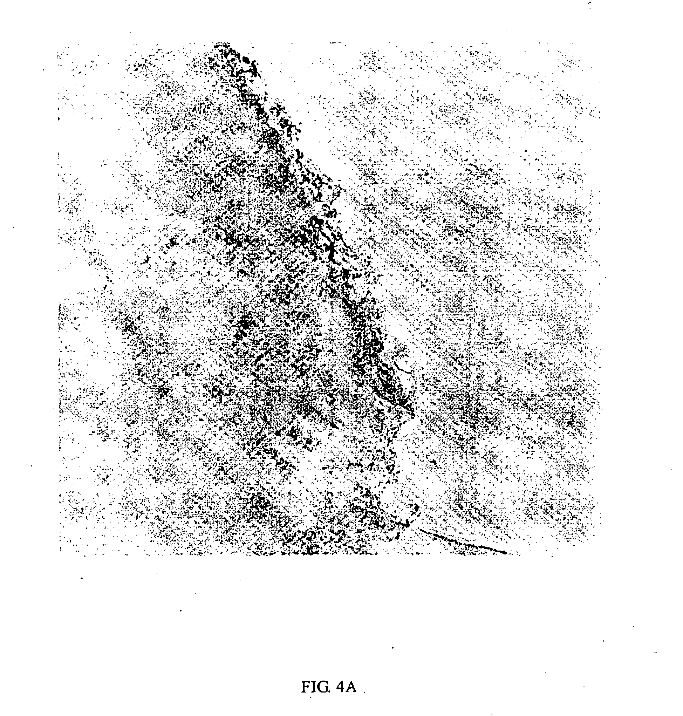

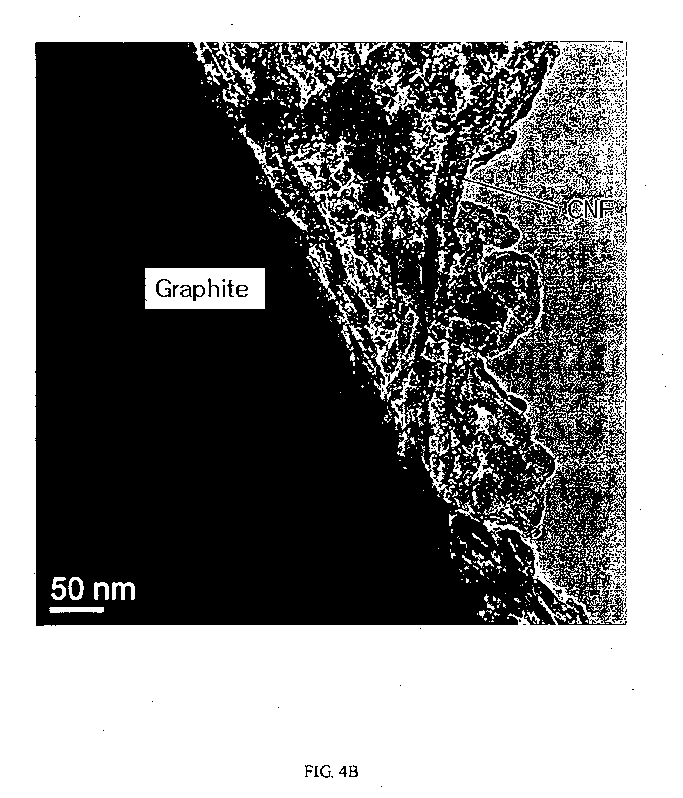

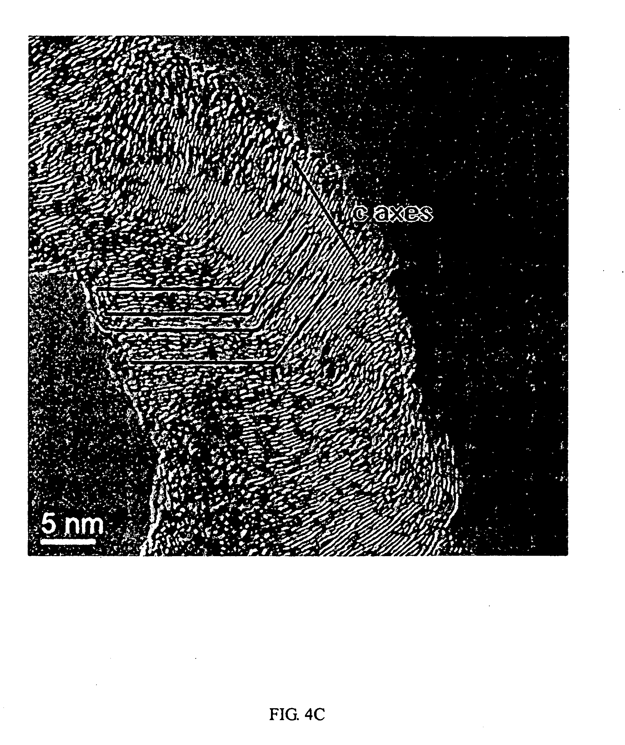

FIG. 4 is a high resolution transmission electron microscope (TEM) photography of the surface of graphite in Preparation Example 1, where the carbon nano fiber is hybridized in a vine form. FIG. 4A and FIG. 4B show carbon nano fibers on the surface of graphite and FIG. 4C shows the herringbone structure of the carbon nano fiber.

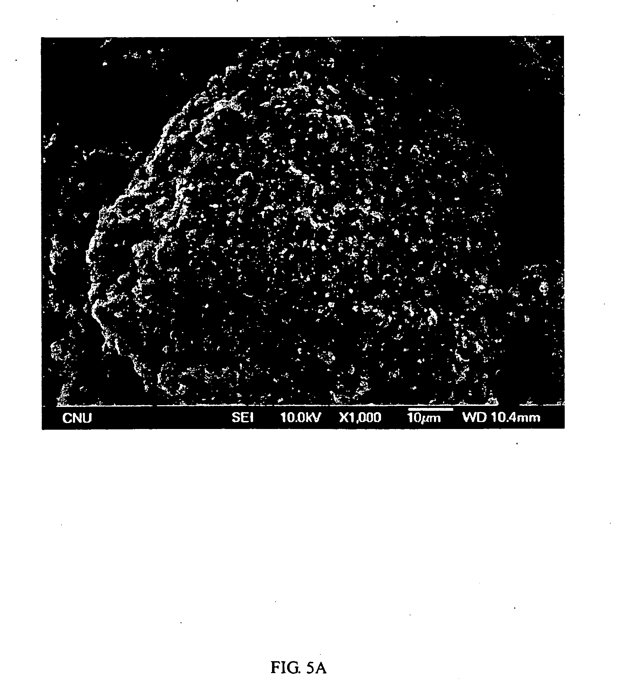

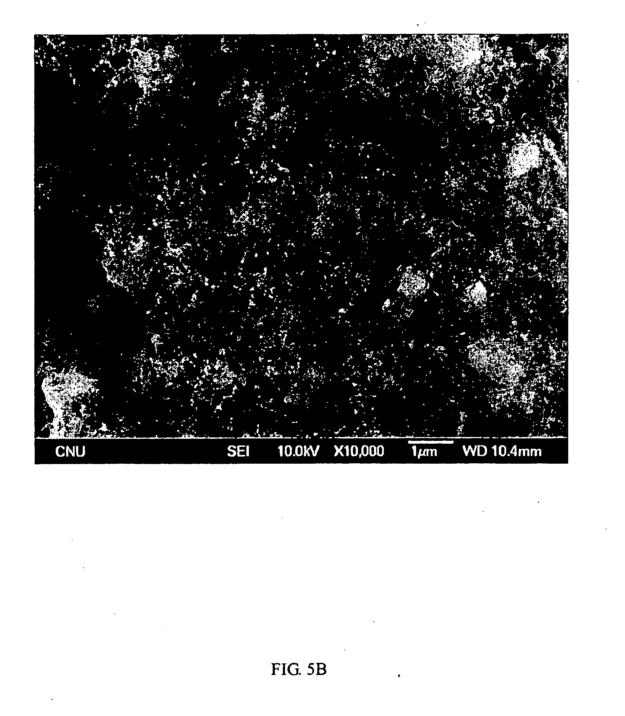

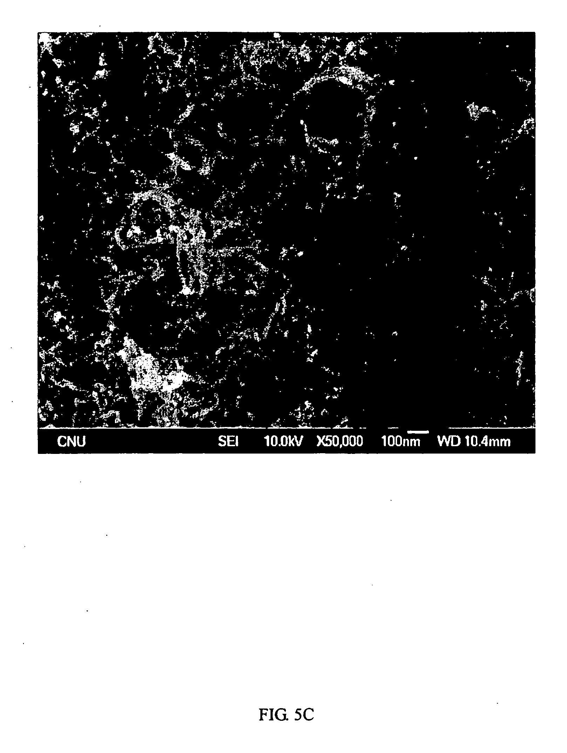

FIG. 5 is a Field Emission Scanning Electron Microscope (FE-SEM) photography of the surface of silicon in Preparation Example 4, where the carbon nano fiber is hybridized. FIG. 5A is a photography (magnitude x1000), FIG. 5B is a photography (magnitude x10000) and FIG. 5C is a photography (magnitude x50000).

FIG. 6 is a Field Emission Scanning Electron Microscope (FE-SEM) photography of the surface of silicon in Comparative Preparation Example 2, where the carbon nano fiber is not hybridized, but simply stacked. FIG. 6A is a photography (magnitude x2000) and FIG. 6B is a photography (magnitude x50000).

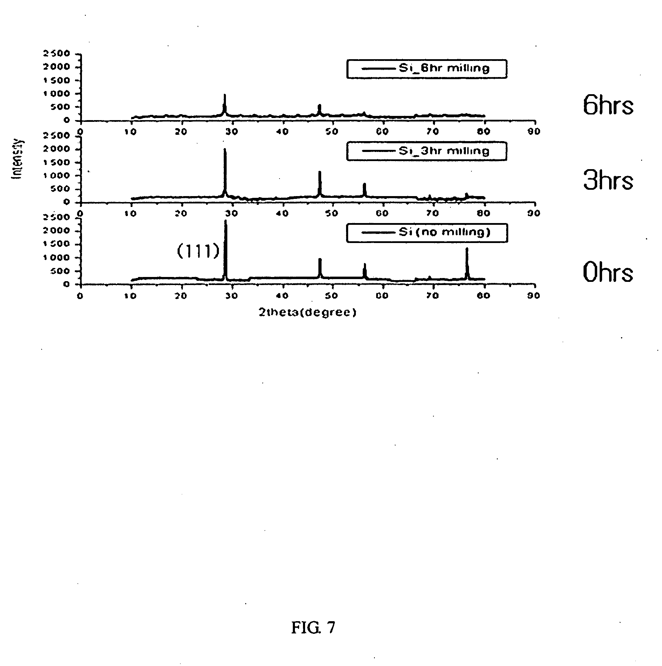

FIG. 7 is a graph indicating X-Ray Diffractometer (XRD) peak of the silicon powder used in Preparation Examples 3 and 4, according to the time lapse of planetary mill treatment. It shows that the crystalline degree of silicon is declined according to the planetary mill treatment.

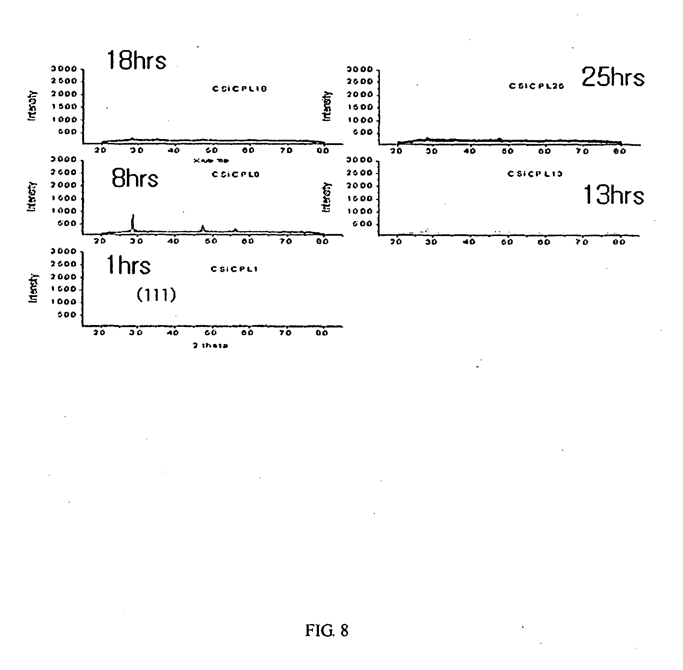

FIG. 8 is a graph indicating X-Ray Diffractometer (XRD) peak of the complex of the silicon and the graphite powder used in Preparation Examples 5~9, according to the time lapse of planetary mill treatment. It shows that the crystalline degree of silicon is declined according to the planetary mill treatment. The intensity of the plane (111) of silicon and graphite complexes decreases.

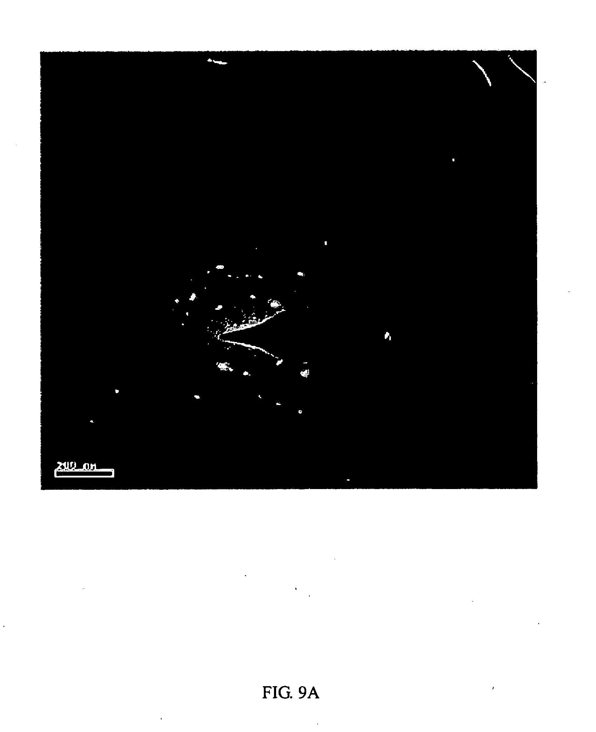

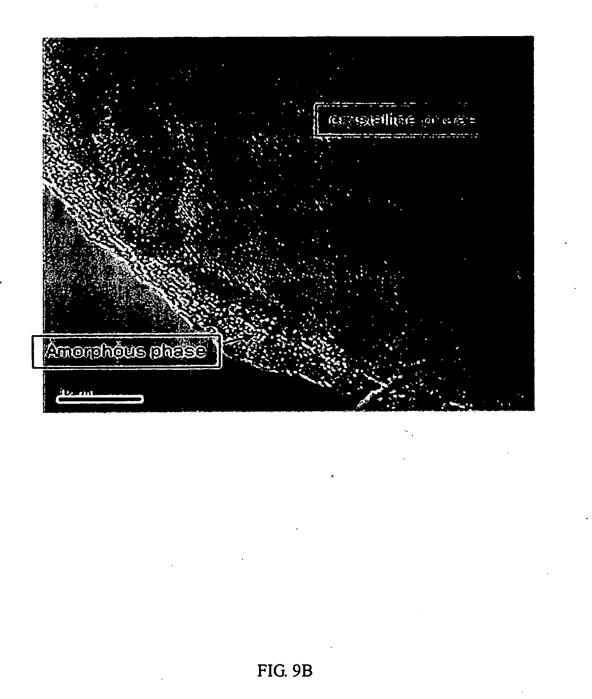

FIG. 9A is the diffraction pattern of transmission electron microscope (TEM) of the silicon powder used in Preparation Example 4 after planetary mill treatment. FIG. 9B is a high resolution transmission electron microscope (TEM) photograph of said silicon powder whose surface is partially amorphous

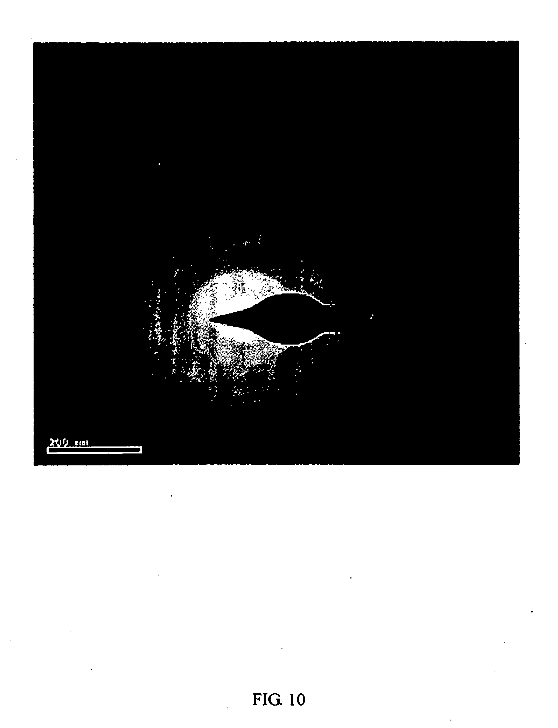

FIG. 10 is the diffraction pattern of transmission electron microscope (TEM) of the silicon powder used in Preparation Example 9 after planetary mill treatment, which shows the crystalline silicon changes to an amorphous form.

## DETAILED DESCRIPTION OF THE INVENTION

The present invention affords the anode active material hybridized with the carbon nano fiber for lithium secondary battery, wherein the carbon nano fiber is grown in a vine form and surrounds the surface of anode active material selected from amorphous silicon and/or the complex of graphite and amorphous silicon. In the present invention, the metal catalyst for growing the carbon nano fiber has been prepared by co-precipitation method in an aqueous solution. Further, in order to grow the carbon nano fiber in a vine form, said metal catalyst has been uniformly dispersed on the surface of anode active material, followed by drying and heating the mixture of metal catalyst and anode active material.

By a chemical vapor deposition method, the carbon nano fiber with following structure can be prepared. The diameter of the obtained carbon nano fiber is 5 ~ 300 nm, the aspect ratio is 10 ~ 10000, the form of the carbon nano fiber is platelet or herringbone structure, and the thickness of the carbon nano fiber covering the surface of the active anode material is 5 ~ 1000 nm. Because the grown carbon nano fiber surrounds anode active material in a vine form, the prevention of volume expansion of anode active material can be made in the course of inserting/emitting the lithium ion. The preferred diameter of the obtained carbon nano fiber is 5 ~ 50 nm, the preferred aspect ratio is 10 ~ 100, and the preferred thickness of the carbon nano fiber covering the surface of the active anode material is 15 ~ 200 nm.

On the other hand, if the carbon nano tube is grown on the surface of anode active material, the enhancement of electro-conductivity can be made, while the charging/discharging properties are declined compared to those of the case applying the carbon nano fiber, according to the repetition of cycles. It has been considered that the volume expansion of anode active material can not be controlled by the carbon nano tube grown on the surface of anode active material.

Recently, graphite material has been used as anode active material instead of pure lithium metal for lithium secondary battery. Various kinds of carbon material, such as carbon nano fiber, cokes, meso-carbon, artificial graphite and/or natural graphite, have been used as anode active material. Further, crystalline graphite has been commercially used as anode active material, because it can maintain the broader voltage flatness compared to that of cokes or amorphous carbon.

Since the higher crystallinity of graphite shows the better cyclic property due to the convenience of insertion/emission of lithium ion, artificial graphite containing more than 90% of crystallinity has been prepared as anode active material by a heat treatment over 2000 °C. On the other hand, natural graphite which can be easily obtained due to its high deposit in the nature has a handicap to be applied to battery owing to high non-reversible capacity and low cyclic property compared to artificial graphite. Therefore, natural graphite requires further treatments for commercial application to the battery, such as reforming the surface of natural graphite by a milling process, mixing and complexing the fine crystalline carbon material, adding various kinds of additives and oxidative treating the part of surface of graphite using an acid solution. In case that the carbon nano tube is grown on the surface of natural graphite, the electro conductivity has been increased whereas the cyclic properties have been declined by repeating charging/discharging the battery. We consider that such a carbon nano tube grown on the surface of anode active material cannot prevent the volume expansion of anode active material.

The catalyst for preparing a carbon nano fiber has been already known. For example, transition metals, such as Fe, Co, and Ni, have been used (Catal. Reu-Sci.Eng., 42(4) pp 481-510 (2000)). In the present invention, at least 1 metal catalyst selected from Fe, Co, Ni, Cu, Mg, Mn, Ti, Sn, Si, Zr, Zn, Ge, Pb and/or In has been used. The form of catalyst can be a form of alkoxide, oxide, chloride, nitrate or carbonate.

For supporting the metal catalyst particle on the surface of anode active material, a sol-gel method, a precipitation method, a hydrothermal reaction method, a spray heating method, a spray drying method and/or a ball-mill method can be used. Further, anode active material containing metal particles can be prepared by introducing further oxidation or reduction process. However, the preferred preparation method does not require further oxidation or reduction process.

In order to grow the carbon nano fiber on the surface of anode active material, carbon sources, such as carbon monoxide, methane, acetylene and/or ethylene, can be used for a gas phase reaction under high temperature. The preferred carbon source may be carbon mono oxide or ethylene in the temperature range of 400 ~ 800 °C. The growing amount of a carbon nano fiber can be 5 ~ 200 wt% as to the amount of anode active material. The preferred amount of the carbon nano fiber shall be 5 ~ 100 wt% as to the amount of anode active material.

Because the hybridized anode material formed from the carbon nano fiber and graphite in which the carbon nano fiber surrounds the graphite surface in a vine form does not mainly influence the change of initial particle size of anode active material , this hybridized material can be used without further milling process as anode active material for lithium secondary battery. The electrode of secondary battery can be prepared in a known method. Specifically, the electrode has been prepared with following steps comprising i) dissolving the binder (PVDF) with NMP solvent ; ii) preparing the slurry containing the binder and the anode active material where their wt ratio is 15 : 85, respectively; and iii) coating the obtained slurry on the copper plate whose thickness is 15 micro meter. To remove the organic solvent completely, the prepared electrode shall be dried in a vacuum oven at 120 ~ 180 °C for 12 hours. After drying the obtained electrode, the surface of the electrode is pressed using a roller in order to bind the electrode strongly to the copper plate as well as to maintain the density of electrode constantly. The shape of the electrode is coin shape with 12 mm of diameter. Further, an opposite electrode is prepared using lithium metal, while the electrolyte is prepared using 1M of $LiPF_6$ (EC:DEC = 1:1 v/v). Through the observation using FE-SEM, the growth of carbon nano fibers has been confirmed on the carbon nano fiber/graphite hybridized anode active material. The apparatus for observation is FE-SEM model JSM-6700F made by JEOL and the standard magnitude of SEM is adjusted to x100000 at the time of starting. Further, TEM observation has been made simultaneously to interpret the structure under 200 kV condition.

The present invention can be explained more concretely by following Preparation Examples, Comparative Preparation Examples, Examples and Comparative Examples. However, the scope of the present invention shall not be limited by following Examples.

## EXAMPLES

(Comparative Preparation Example 1) Preparation of a negative electrode containing natural graphite anode material hybridized with carbon nano fibers.

9g of natural graphite, 5.09g of nickel nitrate (Ni $(NO_3)_2$ $6H_2O$), 0.5g of ammonium bicarbonate($NH_4HCO_3$) and 300ml of water are mixed for 1 hour to prepare suspension. The removal of water content is performed by filtering the obtained suspension using a funnel filter. Then, the obtained solid content is dried using a vacuum oven at 100°C for 24 hours. 1g of dried graphite solid content is coated on the quartz plate. Using a horizontal quartz tube, the obtained material is heated from 100°C to 550°C in a heating velocity of 10°C/min with flowing helium : hydrogen mixed gas (160ml/min : 40ml/min). The material is laid at 550°C for 2 hours. The gas phase carbonizing reaction is carried out for 5 min by flowing ethylene : hydrogen : helium (80 ml/min : 40 ml/min : 80 ml/min) mixed gas. It has been revealed that the amount of the synthesized carbon nano fiber is 23 wt%, the aspect ratio is more than 50, and the diameter of fiber is 10~50nm which is obtained from the FE-SEM observation. Also, through the TEM observation, the structure of the carbon nano fiber is observed as herringbone structure.

FIG. 3 and FIG. 4 show the structure of the carbon nano fiber obtained in this Example. Using the obtained anode active material, negative electrode has been prepared by spreading the slurry (anode active material : binder = 85 : 15, weight ratio) to the copper plate.

(Comparative Preparation Example 2) Preparation of a negative electrode containing natural graphite anode material hybridized with carbon nano fibers.

10g of natural graphite, 0.79g of nickel nitrate (Ni $(NO_3)_2$ $6H_2O$), 0.29g of iron nitrate (Fe $(NO_3)_2$ $9H_2O$), 1.0g of ammonium bicarbonate($NH_4HCO_3$) and 300ml of water are mixed for 1 hour to prepare suspension. The removal of water content is performed by filtering the obtained suspension using a funnel filter. Then, the obtained solid content is dried using a vacuum oven at 100°C for 24 hours. 1g of dried graphite solid content is coated on the quartz plate. Using a horizontal quartz tube, the obtained material is heated from 100°C to 580°C in a heating velocity of 10°C/min with flowing helium : hydrogen mixed gas (160ml/min : 40ml/min). The material is laid at 580°C for 2 hours. The gas phase carbonizing reaction is carried out for 30 min by flowing carbon monooxide : hydrogen (160 ml/min : 40 ml/min) mixed gas. It has been revealed that the amount of the synthesized carbon nano fiber is 16 wt%, the aspect ratio is more than 50, and the diameter of the fiber is 20~60nm which is obtained from the FE-SEM observation. Also, through the TEM observation, the structure of the carbon nano fiber is observed as platelet structure.

Using the obtained anode active material, a negative electrode has been prepared by spreading the slurry (anode active material : binder = 85 : 15, weight ratio) to the copper plate.

(Preparation Example 1) Preparation of a negative electrode containing amorphous silicon anode material hybridized with carbon nano fibers.

50g of crystalline silicon and 500g of metal sphere having 10mm diameter are laid on 500ml of metal bowl in argon atmosphere. Using the planetary mill, crystalline silicon is milled with rotation at 200rpm. The milling time is 3 hours (FIG. 7). 10g of milled partially amorphous silicon powder, 0.99g of cobalt nitrate (Co $(NO_3)_3$ $9H_2O$), 2.2g of ammonium bicarbonate($NH_4HCO_3$) and 300ml of water are mixed for 1 hour to prepare suspension. The removal of water content is performed by filtering the obtained suspension using a funnel filter. Then, the obtained solid content is dried using a vacuum oven at 100°C for 24 hours. 1g of dried graphite solid content is coated on the quartz plate. Using a horizontal quartz tube, the obtained material is heated from 100°C to 550°C in a heating velocity of 10°C/min with flowing helium : hydrogen mixed gas (160ml/min : 40ml/min). The material is laid at 550°C for 2 hours. The gas phase carbonizing reaction is carried out for 10 min by flowing ethylene : hydrogen : helium (80 ml/min : 40 ml/min : 80 ml/min) mixed gas. It has been revealed that the amount of the synthesized carbon nano fiber is 15 wt%, the aspect ratio is more than 50, and the diameter of the fiber is 10~20nm which is obtained from the FE-SEM observation. Also, through the TEM observation, the structure of the carbon nano fiber is observed as herringbone structure.

Using the obtained anode active material, a negative electrode has been prepared by spreading the slurry (anode active material : binder = 85 : 15, weight ratio) to the copper plate.

(Preparation Example 2) Preparation of a negative electrode containing amorphous silicon anode material hybridized with carbon nano fibers.

Anode active material and carbon nano fibers are prepared as the same manner with Preparation Example 1 except that the milling time using planetary mill is changed from 3 hours to 6 hours (FIG. 7 and FIG. 9).

It has been revealed that the amount of the synthesized carbon nano fiber is 31 wt%, the aspect ratio is more than 50, and the diameter of the fiber is 10~20nm which is obtained from the FE-SEM observation. Also, through the TEM observation, the structure of the carbon nano fiber is observed as herringbone structure.

FIG. 5 shows the structure of the carbon nano fiber obtained in this Example. Using the obtained anode active material, a negative electrode has been prepared by spreading the slurry (anode active material : binder = 85 : 15, weight ratio) to the copper plate.

(Preparation Example 3) Preparation of a negative electrode containing natural graphite and amorphous silicon complex anode material hybridized with carbon nano fibers.

43.5g of crystalline silicon, 6.5g of natural graphite and 500g of metal sphere having 10mm diameter are laid on 500ml of metal bowl in argon atmosphere. Using the planetary mill, crystalline silicon is milled with rotation at 200rpm. The milling time is 1 hour (FIG. 8). 10g of milled amorphous silicon/graphite complex powder, 0.99g of cobalt nitrate (Co$(NO_3)_3$ 9H$_2$0), 2.2g of ammonium bicarbonate(NH$_4$HCO$_3$) and 300ml of water are mixed for 1 hour to prepare suspension. The removal of water content is performed by filtering the obtained suspension using a funnel filter. Then, the obtained solid content is dried using a vacuum oven at 100°C for 24 hours. 1g of dried graphite solid content is coated on the quartz plate. Using a horizontal quartz tube, the obtained material is heated from 300 °C to 550°C in a heating velocity of 10°C/min with flowing helium : hydrogen mixed gas (160ml/min : 40ml/min). The material is laid at 550°C for 2 hours. The gas phase carbonizing reaction is carried out for 10 min by flowing ethylene : hydrogen : helium (80 ml/min : 40 ml/min : 80 ml/min) mixed gas. It has been revealed that the amount of the synthesized carbon nano fiber is 12 wt%, the aspect ratio is more than 50, and the diameter of the fiber is 10~20nm which is obtained from the FE-SEM observation. Also, through the TEM observation, the structure of the carbon nano fiber is observed as herringbone structure.

Using the obtained anode active material, a negative electrode has been prepared by spreading the slurry (anode active material : binder = 85 : 15, weight ratio) to the copper plate.

(Preparation Example 4) Preparation of a negative electrode containing natural graphite and amorphous silicon complex anode material hybridized with carbon nano fibers.

Anode active material and carbon nano fibers are prepared as the same manner with Preparation Example 5 except that the milling time using planetary mill is changed from 1 hour to 8 hours (FIG. 8).

It has been revealed that the amount of the synthesized carbon nano fiber is 21 wt%, the aspect ratio is more than 50, and the diameter of the fiber is 10~20nm which is obtained from the FE-SEM observation. Also, through the TEM observation, the structure of the carbon nano fiber is observed as herringbone structure.

Using the obtained anode active material, a negative electrode has been prepared by spreading the slurry (anode active material : binder = 85 : 15, weight ratio) to the copper plate.

(Preparation Example 5) Preparation of a negative electrode containing natural graphite and amorphous silicon complex anode material hybridized with carbon nano fibers.

Anode active material and carbon nano fibers are prepared as the same manner with Preparation Example 3 except that the milling time using a planetary mill is changed from 1 hour to 13 hours (FIG. 8).

It has been revealed that the amount of the synthesized carbon nano fiber is 35 wt%, the aspect ratio is more than 50, and the diameter of the fiber is 10~20nm which is obtained from the FE-SEM observation. Also, through the TEM observation, the structure of the carbon nano fiber is observed as herringbone structure.

Using the obtained anode active material, a negative electrode has been prepared by spreading the slurry (anode active material : binder = 85 : 15, weight ratio) to the copper plate.

(Preparation Example 6) Preparation of a negative electrode containing natural graphite and amorphous silicon complex anode material hybridized with carbon nano fibers.

Anode active material and carbon nano fibers are prepared as the same manner with Preparation Example 3 except that the milling time using a planetary mill is changed from 1 hour to 18 hours (FIG. 8).

It has been revealed that the amount of the synthesized carbon nano fiber is 39 wt%, the aspect ratio is more than 50, and the diameter of the fiber is 10~20nm which is obtained from the FE-SEM observation. Also, through the TEM observation, the structure of the carbon nano fiber is observed as herringbone structure.

Using the obtained anode active material, a negative electrode has been prepared by spreading the slurry (anode active material : binder = 85 : 15, weight ratio) to the copper plate.

(Preparation Example 7) Preparation of a negative electrode containing natural graphite and amorphous silicon complex anode material hybridized with carbon nano fibers.

Anode active material and carbon nano fibers are prepared as the same manner with Preparation Example 3 except that the milling time using planetary mill is changed from 1 hour to 25 hours (FIG. 8 and FIG. 10)

It has been revealed that the amount of the synthesized carbon nano fiber is 50 wt%, the aspect ratio is more than 50, and the diameter of the fiber is 10~20nm which is obtained from the FE-SEM observation. Also, through the TEM observation, the structure of the carbon nano fiber is observed as herringbone structure.

Using the obtained anode active material, a negative electrode has been prepared by spreading the slurry (anode active material : binder = 85 : 15, weight ratio) to the copper plate.

(Comparative Preparation Example 3) Preparation of a negative electrode containing crystalline silicon/graphite anode material hybridized with carbon nano fibers.

43.5g of crystalline silicon powder screened by 320 mesh sieve and 6.5g of natural graphite powder are laid on 500ml of plastic bowl, and mixed in dried ball-mill method for 1 hour.

10g of silicon/graphite mixed powder, 0.99g of cobalt nitrate (Co $(NO_3)_3$ $9H_2O$), 2.2g of ammonium bicarbonate $(NH_4HCO_3)$ and 300ml of water are mixed for 1 hour to prepare suspension. The removal of water content is performed by filtering the obtained suspension using a funnel filter. Then, the obtained solid content is dried using a vacuum oven at 100°C for 24 hours. 1g of dried graphite solid content is coated on the quartz plate. Using a horizontal quartz tube, the obtained material is heated from 300 °C to 550°C in a heating velocity of 10°C/min with flowing helium : hydrogen mixed gas (160ml/min : 40ml/min). The material is laid at 550 °C for 2 hours. The gas phase carbonizing reaction is carried out for 10 min by flowing ethylene : hydrogen : helium (80 ml/min : 40 ml/min : 80 ml/min) mixed gas (FIG. 2B). It has been revealed that the amount of the synthesized carbon nano fiber is 12 wt%, the aspect ratio is more than 50, and the diameter of the fiber is 10~80nm which is obtained from the FE-SEM observation. The growth of the carbon nano fiber mainly occurs on the surface of graphite active material, whereas only the small amount of growth of the carbon nano fiber is observed on the surface of silicon.

Using the obtained anode active material, a negative electrode has been prepared by spreading the slurry (anode active material : binder = 85 : 15, weight ratio) to the copper plate.

(Comparative Preparation Example 4) Preparation of a negative electrode containing crystalline silicon anode material hybridized with carbon nano fibers.

10g of crystalline silicon powder screened by 320 mesh sieve, 0.99g of cobalt nitrate (Co $(NO_3)_3$ $9H_2O$), 2.2g of ammonium bicarbonate$(NH_4HCO_3)$ and 300ml of water are mixed for 1 hour to prepare suspension. The removal of water content is performed by filtering the obtained suspension using a funnel filter. Then, the obtained solid content is dried using a vacuum oven at 100°C for 24 hours. 1g of dried graphite solid content is coated on the quartz plate. Using a horizontal quartz tube, the obtained material is heated from 300 °C to 550 °C in a heating velocity of 10°C/min with flowing helium : hydrogen mixed gas (160ml/min : 40ml/min). The material is laid at 550 °C for 2 hours. The gas phase carbonizing reaction is carried out for 10 min by flowing ethylene : hydrogen : helium (80 ml/min : 40 ml/min : 80 ml/min) mixed gas. It has been revealed that the amount of the synthesized carbon nano fiber is 28 wt%, the aspect ratio is more than 50, and the diameter of the fiber is 10~30nm which is obtained from the FE-SEM observation. The growth of carbon nano fiber mainly occurs only on the corner part of silicon powder, but not on the plane part of silicon powder (FIG. 6A). Further, silicon powder and the carbon nano fiber are easily separated without hybridization (FIG. 6B).

Using the obtained anode active material, a negative electrode has been prepared by spreading the slurry (anode active material : binder = 85 : 15, weight ratio) to the copper plate.

(Comparative Preparation Example 5) Preparation of a negative electrode containing only natural graphite.

Using only natural graphite as anode active material, a negative electrode has been prepared by spreading the slurry (natural graphite : binder = 85 : 15, weight ratio) to the copper plate.

(Comparative Preparation Example 6) Preparation of a negative electrode containing natural graphite anode material and carbon nano material.

Carbon nano material is prepared according to the method disclosed in U.S.Pat. No. 6,440,610 B1. Then, a negative electrode has been prepared by spreading the slurry (anode active material prepared by the method disclosed in U.S.Pat. No. 6,440,610 B1, natural graphite : binder = 85 : 15, weight ratio) to the copper plate.

The following description is a method for preparing carbon nano material in U.S.Pat. No. 6,440,610 B1. "After dissolving 20 g of nickel nitrate into water, the solution was mixed with 200 g of natural graphite. Graphite material on a surface layer on which particles of nickel nitrate were formed was obtained by spray drying the mixture. A resulting graphite material on which nickel oxides were formed was obtained by carbonizing the obtained graphite material at a temperature of 800°C, and oxidizing the carbide in air at a temperature of 400°C for about 4 hours. The obtained resulting graphite material was passed through a reduction process in which hydrogen was used for about 20 hours at a temperature of 500°C, obtaining natural graphite powder on a surface layer of which Ni particles were formed. A vapor growing fiber was grown on Ni catalysts in a vapor deposition method by putting the obtained powder into a ceramic boat and injecting acetylene gas into the boat at a temperature of about 600°C. After a reaction for about 30 minutes, acetylene gas was substituted with argon, and vapor growing fibers were slowly cooled to the ordinary temperature " (FIG. 2C).

We have conducted an experiment according to the method described above. However, the desirable carbon nano fiber having following conditions, such as diameter (5~300nm), aspect ratio (10~10000), and thickness of carbon nano fibers (5~1000nm), cannot be obtained. What we can obtain is only fiber type carbon polymeric material. However, we have measured the yield of the carbon nano tube using an analytical apparatus. In any event, the amount of the carbon nano tube in the carbon polymeric material is less than 5 wt% of the total carbon polymeric material.

Using the carbon nano material obtained in this Example, a negative electrode has been prepared by spreading the slurry (the obtained carbon nano material : binder = 85 : 15, weight ratio) to the copper plate.

(Comparative Preparation Example 7) Preparation of a negative electrode containing natural graphite anode material hybridized with carbon nano tubes.

10g of natural graphite, 3.65g of iron nitrate (Fe $(NO_3)_2$ $9H_2O$), 7.3g of ammonium bicarbonate($NH_4HCO_3$) and 300ml of water are mixed for 1 hour to prepare suspension. The removal of water content is performed by filtering the obtained suspension using a funnel filter. Then, the obtained solid is dried using a vacuum oven at 100°C for 24 hours. 1g of dried graphite solid is coated on the quartz plate. Using a horizontal quartz tube, the obtained material is heated from 300°C to 680°C in a heating velocity of 10 °C/min with flowing helium : hydrogen mixed gas (160ml/min : 40ml/min). The material is laid at 550 °C for 2 hours. The gas phase carbonizing reaction is carried out for 30 min by flowing carbon monooxide : hydrogen (160 ml/min : 40 ml/min) mixed gas. It has been revealed that the amount of the synthesized carbon nano material is 5 wt%, the aspect ratio is more than 50, and the diameter of the fiber is 20~40nm which is obtained from the FE-SEM observation. Also, through the TEM observation, the structure of the carbon nano material is observed as carbon nano tubes.

Using the obtained anode active material, a negative electrode has been prepared by spreading the slurry (anode active material : binder = 85 : 15, weight ratio) to the copper plate.

Table 1 shows the composition of anode active material and the amount of grown carbon nano fibers in Preparation Examples and Comparative Preparation Examples.

Table 1.

| Sample | Amount of graphite (wt part) | Amount of silicon (wt part) | Milling time (hr) | Amorphous degree (%) | Amount of grown carbon nano fiber (%) |
|---|---|---|---|---|---|
| Com. Prep.Exp. 1 | 100 | 0 | 0 | - | 23 |
| Com. Prep.Exp. 2 | 100 | 0 | 0 | - | 16 |
| Prep.Exp. 1 | 0 | 100 | 3 | 15 | 15 |
| Prep.Exp. 2 | 0 | 100 | 6 | 59 | 31 |
| Prep.Exp. 3 | 13 | 87 | 1 | 2 | 12 |
| Prep.Exp. 4 | 13 | 87 | 8 | 71 | 21 |
| Prep.Exp. 5 | 13 | 87 | 13 | 86 | 35 |
| Prep.Exp. 6 | 13 | 87 | 18 | 89 | 39 |
| Prep.Exp. 7 | 13 | 87 | 25 | 89 | 50 |
| Com.Prep.Exp. 3 | 13 | 87 | 0 | 0 | 12 |

(continued)

| Sample | Amount of graphite (wt part) | Amount of silicon (wt part) | Milling time (hr) | Amorphous degree (%) | Amount of grown carbon nano fiber (%) |
|---|---|---|---|---|---|
| Com.Prep.Exp.4 | 0 | 100 | 0 | 0 | 28 |
| Com.Prep.Exp.5 | 100 | 0 | 0 | - | 0 |
| Com.Prep.Exp.6 | 100 | 0 | 0 | - | <5 |
| Com.Prep.Exp.7 | 100 | 0 | 0 | - | 5 |

In this table, 'Amorphous degree' is measured by the comparison of main peak strength in crystalline silicon $d_{(111)}$ plate through XRD. It is calculated by the following equation ;

$$\text{(Main peak strength in crystalline silicon } d_{(111)} \text{ plate before milling} - \text{main peak strength in silicon } d_{(111)} \text{ plate for preparation) / main peak strength in crystalline silicon } d_{(111)} \text{ plate before milling x 100(\%)}$$

'The amount of the grown carbon nano fiber' is calculated by the following equation ;

$$\text{(Weight of hybridized anode active material} - \text{weight of anode active material before reaction) / weight of anode active material before reaction x 100(\%)}$$

(Comparative Examples 1-2 Example 1~7) Charging/discharging test of anode in secondary battery

The charging/discharging capacity has been measured using the anode prepared in Comparative Examples 1-2 Preparation Examples 1~7.

Using the assembled half cell, charging/discharging cycles (12 min cycle, 1 hr cycle, 10 hrs cycle) have been carried out 30 times. The maintenance of charging/discharging capacity has been measured in each cycle. Table 2 shows the maintenance of charging/discharging capacity.

(Comparative Example 3~7) Charging/discharging test of anode in secondary battery

The charging/discharging capacity has been measured using the anode prepared in Comparative Preparation Examples 3~7. In Comparative Preparation Examples 3~4, the anode is prepared by hybridizing grown carbon nano fibers randomly. In Comparative Preparation Examples 5, the anode is prepared by natural graphite. In Comparative Preparation Examples 6, the anode is prepared by hybridizing grown carbon nano fibers randomly. In Comparative Preparation Examples 7, the anode is prepared by hybridizing grown carbon nano tubes.

Using the assembled half cell, charging/discharging cycles (12 min cycle, 1 hr cycle, 10 hrs cycle) have been carried out 30 times. The maintenance of charging/discharging capacity has been measured in each cycle. Table 2 shows the maintenance of charging/discharging capacity.

Table 2.

| Example No. | Amount of grown carbon nano fiber(%) | Maintenance capacity after discharging (%) | | | Structure of carbon nano fiber |
|---|---|---|---|---|---|
| | | 0.1C | 1C | 5C | |
| Com. Exp. 1 | 23 | 98 | 93 | 84 | herringbone |
| Com. Exp. 2 | 16 | 99 | 96 | 87 | platelet |
| Exp. 1 | 15 | 98 | 94 | 86 | herringbone |

(continued)

| Example No. | Amount of grown carbon nano fiber(%) | Maintenance capacity after discharging (%) | | | Structure of carbon nano fiber |
|---|---|---|---|---|---|
| | | 0.1C | 1C | 5C | |
| Exp.2 | 31 | 99 | 95 | 85 | herringbone |
| Exp.3 | 12 | 98 | 92 | 84 | herringbone |
| Exp. 4 | 21 | 99 | 94 | 84 | herringbone |
| Exp. 5 | 35 | 99 | 94 | 88 | herringbone |
| Exp. 6 | 39 | 99 | 96 | 87 | herringbone |
| Exp. 7 | 50 | 99 | 88 | 83 | herringbone |
| Com.Exp.3 | 12 | 98 | 62 | 72 | random herringbone |
| Com.Exp.4 | 28 | 98 | 61 | 49 | random herringbone |
| Com.Exp.5 | 0 | 98 | 75 | 30 | natural graphite |
| Com.Exp.6 | 0 | 98 | 75 | 30 | random carbon fiber |
| Com.Exp.7 | 5 | 99 | 92 | 68 | carbon nano tube(CNT) |

**Claims**

1. Anode active material hybridized with carbon nano fibers for lithium secondary battery prepared by following steps comprising,

   i) dispersing a nano size metal catalyst to the surface of anode material selected from amorphous silicon or a complex of graphite and amorphous silicon; and
   ii) growing the carbon nano fiber by chemical vapor deposition method, wherein carbon nano fibers are grown on the surface of the anode active material; wherein said amorphous silicon is prepared by pre-treatment using mechanical friction energy in an inert atmosphere.

2. The anode active material hybridized with carbon nano fibers for lithium secondary battery according to claim 1, wherein the complex of graphite and amorphous silicon is prepared by the weight ratio of 1 ~ 50 wt% of graphite and 50 ~ 99 wt% of amorphous silicon.

3. The anode active material hybridized with carbon nano fibers for lithium secondary battery according to claim 1, wherein the structure of the carbon nano fiber is platelet or herringbone structure hybridized with anode active material.

4. The anode active material hybridized with carbon nano fibers for lithium secondary battery according to claim 1, wherein the grown amount of carbon nano fibers is 1 ~ 200 wt part as to 100 wt part of anode active material, the diameter of carbon nano fibers is 5 - 300 mm, the aspect ratio is 10 ~ 10000, the thickness of carbon nano fibers on the active anode material is 5 ~ 1000 nm.

5. The anode active material hybridized with carbon nano fibers for lithium secondary battery according to claim 4, wherein the grown amount of carbon nano fibers is 5 - 100 wt part as to 100 wt part of anode active materials the diameter of carbon nano fibers is 5 ~ 100 nm, the aspect ratio is 10 ~ 1000, the thickness of carbon nano fibers on the active anode material is 10 ~ 500 nm.

6. The anode active material hybridized with carbon nano fibers for lithium secondary battery according to claim 5, wherein the grown amount of carbon nano fibers is 10 ~ 80 wt part as to 100 wt part of anode active material, the diameter of carbon nano fibers is 5 - 50 nm, the aspect ratio is 10 ~ 100, the thickness of carbon nano fibers on the active anode material is 15 ~ 200 nm.

7. The anode active material hybridized with carbon nano fibers, for lithium secondary battery according to claim 1, wherein said carbon nano fiber is prepared by chemical vapor deposition method using a carbon source selected from carbon monoxide, methane, acetylene or ethylene in the presence of metal catalyst and said metal catalyst comprised at least one selected from the group consisting of Fe, Co, Ni, Cu, Mg, Mn, Ti, Sn, Si, Zr, Zn, Ge, Pb and In, which is in the form of alkoxide, oxide, chloride, nitrate or carbonate.

8.  The anode active material hybridized with carbon nano fibers for lithium secondary battery according to claim 7, wherein said catalyst can be prepared in the form of a supported catalyst using a sol-gel method, a precipitation method, a hydrothermal method, a spray heating method, a spray drying method or a ball-mill method.

9.  The anode active material hybridized with carbon nano fibers for lithium secondary battery according to claim 1, wherein said carbon nano fiber is prepared by following steps comprising

    i) heating the anode active material particles selected from amorphous silicon or a complex of graphite and amorphous silicon using mixed gas of helium and hydrogen (3~5 L/min : 1 L/min) at 300 ~ 650°C; and
    ii) growing the carbon nano fiber by vapor deposition using a carbon source selected from carbon monoxide, methane, acetylene or ethylene in the presence of catalyst composition made by nickel nitrate and ammonium bicarbonate in mixed gas of helium and hydrogen at 400 ~ 800°C.

10. A lithium secondary battery prepared by anode active material of claim 1.

**Patentansprüche**

1.  Aktives Anodenmaterial, das mit Kohlenstoffnanofasern hybridisiert ist, für eine Lithium-Sekundärbatterie, hergestellt durch die folgenden Stufen, umfassend:

    i) Dispergieren eines Metallkatalysators in Nanogröße auf die Oberfläche eines Anodenmaterials, welches ausgewählt ist unter amorphem Silizium oder einem Komplex von Graphit und amorphem Silizium, und
    ii) Wachsenlassen der Kohlenstoff-Nanofasern durch chemisches Dampfabscheidungsverfahren, wobei man die Kohlenstoff-Nanofasern auf der Oberfläche des aktiven Anodenmaterial wachsen lässt, wobei das amorphe Silizium durch eine Vorbehandlung erzeugt wird, bei der man mechanische Reibungsenergie in einer inerten Atmosphäre anwendet.

2.  Aktives Anodenmaterial, das mit Kohlenstoff-Nanofasern hybridisiert ist, für eine Lithium-Sekundärbatterie nach Anspruch 1, wobei der Komplex von Graphit und amorphem Silizium in einem Gewichtsverhältnis von 1 ~ 50 Gew.-% Graphit und 50 ~ 99 Gew.-% amorphes Silizium erzeugt wird.

3.  Aktives Anodenmaterial, das mit Kohlenstoff-Nanofasern hybridisiert ist, für eine Lithium-Sekundärbatterie nach Anspruch 1, wobei die Struktur der Kohlenstoff-Nanofaser eine Plättchen- oder Grätenstruktur ist, welche mit dem aktiven Anodenmaterial hybridisiert ist.

4.  Aktives Anodenmaterial, das mit Kohlenstoff-Nanofasern hybridisiert ist, für eine Lithium-Sekundärbatterie nach Anspruch 1, wobei die gewachsene Menge an Kohlenstoff-Narofasern 1 ~ 200 Gewichtsteile zu 100 Gewichtsteile aktives Anodenmaterial beträgt, der Durchmesser der Kohlenstoff-Nanofasern 5 ~ 300 nm beträgt, das Aspektverhältnis 10 ~ 10000 beträgt, die Dicke der Kohlenstoff-Nanofasern auf dem aktiven Anodenmaterial 5 ~ 1000 nm beträgt.

5.  Aktives Anodenmaterial, das mit Kohlenstoff-Nanofasern hybridisiert ist, für eine Lithium-Sekundärbatterie nach Anspruch 4, wobei die gewachsene Menge an Kohlenstoff-Nanofasern 5 ~ 100 Gewichtsteile zu 100 Gewichststeilen aktivem Anodenmaterial beträgt, der Durchmesser der Kohlenstoff-Nanofasern 5 ~ 100 nm ist, das Aspektverhältnis 10 ~ 1000 beträgt, die Dicke der Kohlenstoff-Nanofasern auf dem aktiven Anodenmaterial 10 ~ 500 nm beträgt.

6.  Aktives Anodenmaterial, das mit Kohlenstoff-Nanofasern hybridisiert ist, für eine Lithium-Sekundärbatterie nach Anspruch 5, wobei die gewachsene Menge an Kohlenstoff-Nanofasern 10 ~ 80 Gewichtsteile zu 100 Gewichtsteilen aktivem Anodenmaterial beträgt, der Durchmesser der Kohlenstoff-Nanofasern 5 ~ 50 nm ist, das Aspektverhältnis 10 ~ 100 beträgt, die Dicke der Kohlenstoff-Nanofasern auf dem aktiven Anodenmaterial 15 ~ 200 nm beträgt.

7.  Aktives Anodenmaterial, das mit Kohlenstoff-Nanofasern hybridisiert ist, für eine Lithium-Sekundärbatterie nach Anspruch 1, wobei die Kohlenstoff-Nanofaser erzeugt wird durch ein chemische Dampfabscheidungsverfahren unter Verwendung einer Kohlenstoffquelle, die ausgewählt ist unter Kohlenstoffmonoxid, Methan, Acetylen oder Ethylen in der Gegenwart eines Metallkatalysators, und wobei der Metallkatalysator wenigstens eines umfasst, das aus der Gruppe ausgewählt ist, die aus folgendem besteht: Fe, Co, Ni, Cu, Mg, Mn, Ti, Sn, Si, Zr, Zn, Ge, Pb und In, welche in der Form eines Alkoxids, Oxids, Chlorids, Nitrats oder Carbonats vorliegen.

**8.** Aktives Anodenmaterial, das mit Kohlenstoff-Nanofasern hybridisiert ist, für eine Lithium-Sekundärbatterie nach Anspruch 7, wobei der Katalysator in der Form eines Trägerkatalysators erzeugt werden kann unter Verwendung eines Sol-Gel-Verfahrens, eines Präzipitationsverfahrens, eines hydrothermischen Verfahrens, eines Sprüherwärmungsverfahrens, eines Sprühtrockungsverfahrens oder eines Kugelmühlenverfahrens.

**9.** Aktives Anodenmaterial, das mit Kohlenstoff-Nanofasern hybridisiert ist, für eine Lithium-Sekundärbatterie nach Anspruch 1, wobei die Kohlenstoff-Nanofaser erzeugt wird durch die folgenden Stufen, bei denen man

i) Partikel des aktiven Anodenmaterials, das ausgewählt ist unter amorphem Silizium oder einem Komplex von Graphit und amorphem Silizium, unter Verwendung eines Gasgemisches von Helium und Wasserstoff (3 ~ 5 l/min: 1 l/min) auf 300 ~ 650 °C erwärmt, und

ii) die Kohlenstoff-Nanofaser durch Dampfabscheidung wachsen lässt unter Verwendung einer Kohlenstoffquelle, die ausgewählt ist unter Kohlenstoffmonoxid, Methan, Acetylen oder Ethylen in der Gegenwart einer Katalysatorzusammensetzung, die herdie hergestellt wird aus Nickelnitrat und Amoniumbicarbonat in einem Gasgemisch von Helium und Wasserstoff bei 400 ~ 800 °C.

**10.** Lithium-Sekundärbatterie hergestellt mit aktivem Anodenmaterial nach Anspruch 1.

## Revendications

**1.** Matériau actif d'anode hybridé avec des nanofibres de carbone pour une batterie secondaire au lithium, préparé en suivant les étapes consistant à :

i) disperser un catalyseur métallique de taille nanométrique sur la surface d'un matériau d'anode choisi parmi du silicium amorphe ou un complexe de graphite et de silicium amorphe ; et
ii) faire croître la nanofibres de carbone par un procédé de dépôt chimique en phase vapeur, dans lequel des nanofibres de carbone sont mises en croissance sur la surface du matériau actif d'anode ; dans lequel ledit silicium amorphe est préparé par un prétraitement utilisant une énergie mécanique de frottement dans une atmosphère inerte.

**2.** Matériau actif d'anode hybridé avec des nanofibres de carbone pour une batterie secondaire au lithium selon la revendication 1, dans lequel le complexe de graphite et de silicium amorphe est préparé de sorte à obtenir un rapport en poids de 1 à 50 % en poids de graphite et de 50 à 99 % en poids de silicium amorphe.

**3.** Matériau actif d'anode hybridé avec des nanofibres de carbone pour une batterie secondaire au lithium selon la revendication 1, dans lequel la structure de la nanofibre de carbone est une structure de type lamelle ou arête de poisson hybridée avec le matériau actif d'anode.

**4.** Matériau actif d'anode hybridé avec des nanofibres de carbone pour une batterie secondaire au lithium selon la revendication 1, dans lequel la quantité mise en croissance de nanofibres de carbone se situe dans la plage allant de 1 à 200 parties en poids par rapport aux 100 parties en poids de matériau actif d'anode, le diamètre des nanofibres de carbone se situe dans la plage allant de 5 300 nm, le rapport d'aspect se situe dans la plage allant de 10 à 10 000, l'épaisseur des nanofibres de carbone sur le matériau actif d'anode se situe dans la plage allant de 5 à 1 000 nm.

**5.** Matériau actif d'anode hybridé avec des nanofibres de carbone pour une batterie secondaire au lithium selon la revendication 4, dans lequel la quantité mise en croissance de nanofibres de carbone se situe dans la plage allant de 5 à 100 parties en poids par rapport aux 100 parties en poids de matériau actif d'anode, le diamètre des nanofibres de carbone se situe dans la plage allant de 5 à 100 nm, le rapport d'aspect se situe dans la plage allant de 10 à 1 000, l'épaisseur des nanofibres de carbone sur le matériau actif d'anode se situe dans la plage allant de 10 à 500 nm.

**6.** Matériau actif d'anode hybridé avec des nanofibres de carbone pour une batterie secondaire au lithium selon la revendication 5, dans lequel la quantité mise en croissance de nanofibres de carbone se situe dans la plage allant de 10 à 80 parties en poids par rapport aux 100 parties en poids de matériau actif d'anode, le diamètre des nanofibres de carbone se situe dans la plage allant de 5 à 50 nm, le rapport d'aspect se situe dans la plage allant de 10 à 100, l'épaisseur des nanofibres de carbone sur le matériau actif d'anode se situe dans la plage allant de 15 à 200 nm.

7.  Matériau actif d'anode hybridé avec des nanofibres de carbone pour une batterie secondaire au lithium selon la revendication 1, dans lequel ladite nanofibre de carbone est préparée par un procédé de dépôt chimique en phase vapeur en utilisant une source de carbone choisie parmi du monoxyde de carbone, du méthane, de l'acétylène ou de l'éthylène en présence d'un catalyseur métallique et ledit catalyseur métallique comprenant au moins un élément choisi dans le groupe comprenant les éléments Fe, Co, Ni, Cu, Mg, Mn, Ti, Sn, Si, Zr, Zn, Ge, Pb et In, qui est sous la forme d'un alcoxyde, d'un oxyde, d'un chlorure, d'un nitrate ou d'un carbonate.

8.  Matériau actif d'anode hybridé avec des nanofibres de carbone pour une batterie secondaire au lithium selon la revendication 7, dans lequel ledit catalyseur peut être préparé sous la forme d'un catalyseur supporté en utilisant un procédé sol-gel, un procédé de précipitation, un procédé hydrothermique, un procédé de chauffage par pulvérisation, un procédé de séchage par pulvérisation ou un procédé de broyage par boulets.

9.  Matériau actif d'anode hybridé avec des nanofibres de carbone pour une batterie secondaire au lithium selon la revendication 1, dans lequel ladite nanofibre de carbone est préparée en suivant les étapes consistant à :

    i) chauffer les particules de matériau actif d'anode choisi parmi du silicium amorphe ou un complexe de graphite et de silicium amorphe en utilisant un gaz mixte d'hélium et d'hydrogène (de 3 à 5 L/min : 1 L/min) à une température allant de 300 à 650°C; et
    ii) faire croître la nanofibre de carbone par dépôt chimique en phase vapeur en utilisant une source de carbone choisie parmi du monoxyde de carbone, du méthane, de l'acétylène ou de l'éthylène en présence d'une composition de catalyseur comprenant du nitrate de nickel et du bicarbonate d'ammonium dans un gaz mixte d'hélium et d'hydrogène à une température allant de 400 à 800°C.

10. Batterie secondaire au lithium préparée à partir d'un matériau actif d'anode selon la revendication 1.

Hybridized natural graphite

Plate type of natural graphite

FIG. 1

Preparation Process in Examples of Present Invention

```
┌─────────────────────────────────────────────────────────────────┐
│         Pre-treatment of silicon under inert gas atmosphere       │
└─────────────────────────────────────────────────────────────────┘
                                    │
                                    ▼
┌─────────────────────────────────────────────────────────────────┐
│ Preparation of graphite, amorphous silicon or graphite complex support material │
└─────────────────────────────────────────────────────────────────┘
                                    │
                                    ▼
┌─────────────────────────────────────────────────────────────────┐
│        Preparation of catalyst/support material co-precipitation  │
└─────────────────────────────────────────────────────────────────┘
                                    │
                                    ▼
┌─────────────────────────────────────────────────────────────────┐
│                        Precipitation Filter                       │
└─────────────────────────────────────────────────────────────────┘
                                    │
                                    ▼
┌─────────────────────────────────────────────────────────────────┐
│                     Vacuum drying at 100℃                         │
└─────────────────────────────────────────────────────────────────┘
                                    │
                                    ▼
┌─────────────────────────────────────────────────────────────────┐
│          Ethylene reaction at 450-550℃ for 1-10 min              │
└─────────────────────────────────────────────────────────────────┘
```

FIG. 2A

Preparation process in Comparative Examples 1 and 2

| Crystalline silicon or mixture of graphite S support material |
|---|

↓

| Preparation of catalyst/support material co-precipitation |
|---|

↓

| Precipitation Filter |
|---|

↓

| Vacuum drying at 100°C |
|---|

↓

| Ethylene reaction at 450–550°C for 1–10 min |
|---|

FIG. 2B

Preparation Process in Comparative example 4
(U.S.Pat. No. 6,440,610 B1)

```
┌─────────────────────────────────────────────────┐
│            Simple mixing of catalyst            │
└─────────────────────────────────────────────────┘
                         │
                         ▼
┌─────────────────────────────────────────────────┐
│                  Spray-drying                   │
└─────────────────────────────────────────────────┘
                         │
                         ▼
┌─────────────────────────────────────────────────┐
│              Carbonizing at 800℃               │
└─────────────────────────────────────────────────┘
                         │
                         ▼
┌─────────────────────────────────────────────────┐
│        Oxidation treatment at 400℃ for 4hrs     │
└─────────────────────────────────────────────────┘
                         │
                         ▼
┌─────────────────────────────────────────────────┐
│       Reduction treatment at 500℃ for 20hrs     │
└─────────────────────────────────────────────────┘
                         │
                         ▼
┌─────────────────────────────────────────────────┐
│     Acetylene reaction at 600–900℃ for 30min    │
└─────────────────────────────────────────────────┘
```

FIG. 2C

NONE　SEI　3.0kV　X1,000　10μm　WD 8.0mm

FIG. 3A

NONE SEI 3.0kV X5,000 1 μm WD 8.0mm

FIG. 3B

21

FIG. 3C

FIG. 4A

Graphite

CNF

50 nm

FIG. 4B

FIG. 4C

FIG. 5A

FIG. 5B

FIG. 5C

NONE    SEI    3.0kV    X2,000    10 μm    WD 8.0mm

FIG. 6A

NONE · SEI · 3.0kV · X50,000 · 100nm · WD 8.0mm

FIG. 6B

FIG. 7

FIG. 8

FIG. 9A

FIG. 9B

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 529069
- KR 477970
- KR 200599697
- KR 2005100505
- US 6797434 B
- KR 2004100058
- KR 536247

- WO 0367699 A2
- JP 2004186067 A
- JP 2004227988 A
- JP 2004303613 A
- KR 566028
- US 6440610 B1


**Non-patent literature cited in the description**

- **IRESHA R.M KOTTEGODA et al.** *Electrochem. Solid-state lett.,* 2002, vol. 5 (12), A273-A278
- **TASUTOMU TAKAMURA.** *Journal of Power Source,* 2000, vol. 90, 45-51

- **TASUTOMU TAKAMURA et al.** *Journal of Power Source,* 1999, vol. 81-82, 368-372
- *Catal. Reu-Sci.Eng.,* 2000, vol. 42 (4), 481-510